# EUROPEAN PATENT APPLICATION

(11) **EP 4 832 609 A1**
(43) Date of publication of application: **28.10.2026**
(21) Application number: 25738338.0
(22) Date of filing: 03.01.2025
(51) Int. Cl.: H04W 72/044

(54) **COMMUNICATION METHOD AND COMMUNICATION APPARATUS**

(30) Priority: 11.01.2024 CN 202410050228
(71) Applicant: Huawei Technologies Co., Ltd., Shenzhen, Guangdong 518129 (CN)
(72) Inventor: XIE, Xinqian, Shenzhen, Guangdong 518129 (CN)
(74) Representative: Körber, Martin Hans
(86) International application number: PCT/CN2025/070558
(87) International publication number: WO 2025/148807

(57) **Abstract**

This application provides a communication method and a communication apparatus. The method includes: In DC scenarios, if sending a first signal by a terminal device and sending a second signal by the terminal device overlap in time, and first transmit power for sending the first signal by the terminal device on a first carrier and second transmit power for sending the second signal by the terminal device on a second carrier are greater than maximum transmit power of the terminal device, the terminal device may allocate the maximum transmit power of the terminal device in any one of three schemes: power spectral density alignment, equal power allocation, and preferential power allocation to high and low frequency resource units, so that third transmit power for sending the first signal by the terminal device on the first carrier and fourth transmit power for sending the second signal by the terminal device on the second carrier are effectively controlled, to prevent the third transmit power and the fourth transmit power from being greater than the maximum transmit power of the terminal device.

## Description

This application claims priority to Chinese Patent Application No. 202410050228.5, filed with the China National Intellectual Property Administration on January 11, 2024 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

In an LTE system, a terminal device supports simultaneous access to two network devices. Such an access mode is referred to as dual connectivity (Dual Connectivity, DC). One network device is a primary network device, and the other network device is a secondary network device. One or more cells served by the primary network device for the terminal device are classified into a master cell group (Master Cell Group, MCG), and one or more cells served by the secondary network device for the terminal device are referred to as a secondary cell group (Secondary Cell Group, SCG).

To improve a rate at which the terminal device sends an uplink signal to the network device, the terminal device operating in a DC mode can usually send uplink signals to the network device on carriers in both the MCG and the SCG in a same time period. However, total power for sending the uplink signals by the terminal device on all the carriers is usually limited. In related technologies, when the total power for sending the uplink signals by the terminal device on all the carriers is greater than maximum transmit power of the terminal device, the terminal device may reduce, based on a type of to-be-sent signals, power for sending the uplink signal. However, such a power control scheme is applicable only to application scenarios in which the to-be-sent signals are communication signals, and is not applicable to scenarios in which to-be-sent signals are sensing signals or integrated sensing and communication signals.

Therefore, how the terminal device operating in the DC mode can effectively control transmit power of signals when sending the sensing signals or the integrated sensing and communication signals is a problem to be concerned currently.

### SUMMARY

This application provides a communication method and a communication apparatus. In the method, a power allocation solution is redefined. In three schemes: power spectral density alignment, equal power allocation, and preferential power allocation to high and low frequency resource units, when simultaneously sending sensing signals on two different carriers, a terminal device can effectively control transmit power of the signals.

According to a first aspect, a communication method is provided. The method provided in the first aspect may be performed by a terminal device, or may be performed by a chip configured in the terminal device. This is not limited in this application.

Specifically, the method includes: determining first transmit power of a first signal in a first time unit on a first carrier, and determining second transmit power of a second signal in a second time unit on a second carrier, where the first time unit and the second time unit overlap; and when a sum of the first transmit power and the second transmit power is greater than a transmit power threshold, determining third transmit power of the first signal in the first time unit, where the third transmit power is less than or equal to the first transmit power, and determining fourth transmit power of the second signal in the second time unit, where the fourth transmit power is less than or equal to the second transmit power. A frequency domain power spectral density for sending the first signal is equal to a frequency domain power spectral density for sending the second signal. Alternatively, the third transmit power is equal to the fourth transmit power. Alternatively, a power spectral density of the first signal on a first frequency-domain resource on the first carrier is greater than a power spectral density of the first signal on a fourth frequency-domain resource on the second carrier, a frequency of the first carrier is less than a frequency of the second carrier, a frequency of the first frequency-domain resource is less than a frequency of the second frequency-domain resource, and a frequency of the third frequency-domain resource is less than a frequency of the fourth frequency-domain resource.

According to the method provided in the first aspect, in DC scenarios, if sending the first signal by the terminal device and sending the second signal by the terminal device overlap in time, and the sum of the first transmit power and the second transmit power is greater than the transmit power threshold, transmit power of the terminal device may be allocated in any one of the foregoing three schemes, so that the third transmit power for sending the first signal by the terminal device on the first carrier and the fourth transmit power for sending the second signal by the terminal device on the second carrier can be effectively controlled, to prevent the third transmit power and the fourth transmit power from being greater than maximum transmit power of the terminal device.

It should be noted that the first time unit may also be a first time period. The first time unit may be a subframe unit, a slot unit, a mini-slot unit, a symbol unit, or the like. The first time period may also include a plurality of subframe units, a plurality of slot units, a plurality of mini-slot units, a plurality of symbol units, and the like. The second time unit may also be a second time period. The second time unit may also be a subframe unit, a slot unit, a mini-slot unit, a symbol unit, or the like. The second time period may also include a plurality of subframe units, a plurality of slot units, a plurality of mini-slot units, a plurality of symbol units, and the like. Time lengths of the first time unit and the second time unit may be the same or different. Time lengths of the first time period and the second time period may be the same or different. This is not specifically limited in embodiments of this application.

It should be further noted that, that the power spectral density of the first signal on the first frequency-domain resource on the first carrier is greater than the power spectral density of the first signal on the second frequency-domain resource on the first carrier and the power spectral density of the second signal on the third frequency-domain resource on the second carrier is greater than the power spectral density of the second signal on the fourth frequency-domain resource on the second carrier may be understood as that transmit power of the terminal device is preferentially allocated to the first frequency-domain resource on the first carrier and the fourth frequency-domain resource on the second carrier. To be specific, the terminal device preferentially allocates transmit power to the first frequency-domain resource on the first carrier and the fourth frequency-domain resource on the second carrier based on values of the transmit power, and allocates transmit power to the second frequency-domain resource on the first carrier and the third frequency-domain resource on the second carrier based on values of remaining transmit power after allocation to the first frequency-domain resource on the first carrier and the fourth frequency-domain resource on the second carrier is completed.

It should be understood that the first frequency-domain resource may include one resource unit, for example, one subcarrier, or may include a plurality of resource units, for example, a plurality of subcarriers. Similarly, the second frequency-domain resource may also include one or more resource units. The third frequency-domain resource may also include one or more resource units. The fourth frequency-domain resource may also include one or more resource units.

For example, in this embodiment of this application, the first signal may be any one of a communication signal, a sensing signal, or an integrated sensing and communication signal, the second signal may also be any one of a communication signal, a sensing signal, or an integrated sensing and communication signal, and the first signal and the second signal may be the same or different.

Optionally, when the frequency domain power spectral density for sending the first signal is equal to the frequency domain power spectral density for sending the second signal, and a bandwidth of the first signal is greater than a bandwidth of the second signal, the third transmit power is greater than the fourth transmit power.

Optionally, when the third transmit power is equal to the fourth transmit power, and a bandwidth of the first signal is greater than a bandwidth of the second signal, the frequency domain power spectral density of the first signal is less than the frequency domain power spectral density of the second signal.

In a possible implementation of the first aspect, before the determining the third transmit power of the first signal in the first time unit, and determining the fourth transmit power of the second signal in the second time unit, the method further includes: receiving first indication information sent by a network device, where the first indication information indicates a power allocation scheme for the terminal device to send the first signal on the first carrier and send the second signal on the second carrier.

Determining the third transmit power and the fourth transmit power based on the first indication information includes: when the first indication information indicates a first power allocation scheme, determining that the frequency domain power spectral density for sending the first signal is equal to the frequency domain power spectral density for sending the second signal, or the third transmit power is equal to the fourth transmit power; or when the first indication information indicates a second power allocation scheme, determining that the power spectral density of the first signal on the first frequency-domain resource on the first carrier is greater than the power spectral density of the first signal on the second frequency-domain resource on the first carrier, and the power spectral density of the second signal on the third frequency-domain resource on the second carrier is greater than the power spectral density of the second signal on the second frequency-domain resource on the fourth carrier.

In this implementation, after receiving the first indication information, the terminal device may determine an allocation scheme for the third transmit power and the fourth transmit power based on the first indication information of the network device, so that a sum of the third transmit power and the fourth transmit power is not greater than the maximum transmit power of the terminal device.

According to a second aspect, a communication method is provided. The method provided in the second aspect may be performed by a network device, or may be performed by a chip configured in the network device. This is not limited in this application.

Specifically, the method includes: receiving a first signal sent by a terminal device in a first time unit on a first carrier at third transmit power, and a second signal sent by the terminal device in a second time unit on a second carrier at fourth transmit power. A frequency domain power spectral density for sending the first signal is equal to a frequency domain power spectral density for sending the second signal. Alternatively, the third transmit power is equal to the fourth transmit power. Alternatively, a power spectral density of the first signal on a first frequency-domain resource on the first carrier is greater than a power spectral density of the first signal on a fourth frequency-domain resource on the second carrier, a frequency of the first carrier is less than a frequency of the second carrier, a frequency of the first frequency-domain resource is less than a frequency of the second frequency-domain resource, and a frequency of the third frequency-domain resource is less than a frequency of the fourth frequency-domain resource.

According to the method provided in the first aspect, in DC scenarios, the network device may receive the first signal sent by the terminal device at the third transmit power and the second signal sent by the terminal device at the fourth transmit power, where the third transmit power and the fourth transmit power satisfy any one of the foregoing three schemes, so that the third transmit power of the first signal received by the network device on the first carrier and the fourth transmit power of the second signal received by the network device on the second carrier can be effectively controlled, to prevent the third transmit power and the fourth transmit power from being greater than maximum transmit power of the terminal device.

It should be noted that the first time unit may also be a first time period. The first time unit may be a subframe unit, a slot unit, a mini-slot unit, a symbol unit, or the like. The first time period may also include a plurality of subframe units, a plurality of slot units, a plurality of mini-slot units, a plurality of symbol units, and the like. The second time unit may also be a second time period. The second time unit may also be a subframe unit, a slot unit, a mini-slot unit, a symbol unit, or the like. The second time period may also include a plurality of subframe units, a plurality of slot units, a plurality of mini-slot units, a plurality of symbol units, and the like. Time lengths of the first time unit and the second time unit may be the same or different. Time lengths of the first time period and the second time period may be the same or different. This is not specifically limited in embodiments of this application.

It should be further noted that, that the power spectral density of the first signal on the first frequency-domain resource on the first carrier is greater than the power spectral density of the first signal on the second frequency-domain resource on the first carrier and the power spectral density of the second signal on the third frequency-domain resource on the second carrier is greater than the power spectral density of the second signal on the fourth frequency-domain resource on the second carrier may be understood as that transmit power of the terminal device is preferentially allocated to the first frequency-domain resource on the first carrier and the fourth frequency-domain resource on the second carrier. To be specific, the terminal device preferentially allocates transmit power to the first frequency-domain resource on the first carrier and the fourth frequency-domain resource on the second carrier based on values of the transmit power, and allocates transmit power to the second frequency-domain resource on the first carrier and the third frequency-domain resource on the second carrier based on values of remaining transmit power after allocation to the first frequency-domain resource on the first carrier and the fourth frequency-domain resource on the second carrier is completed.

It should be understood that the first frequency-domain resource may include one resource unit, for example, one subcarrier, or may include a plurality of resource units, for example, a plurality of subcarriers. Similarly, the second frequency-domain resource may also include one or more resource units. The third frequency-domain resource may also include one or more resource units. The fourth frequency-domain resource may also include one or more resource units.

For example, in this embodiment of this application, the first signal may be any one of a communication signal, a sensing signal, or an integrated sensing and communication signal, the second signal may also be any one of a communication signal, a sensing signal, or an integrated sensing and communication signal, and the first signal and the second signal may be the same or different.

Optionally, when the frequency domain power spectral density for sending the first signal is equal to the frequency domain power spectral density for sending the second signal, and a bandwidth of the first signal is greater than a bandwidth of the second signal, the third transmit power is greater than the fourth transmit power.

Optionally, when the third transmit power is equal to the fourth transmit power, and a bandwidth of the first signal is greater than a bandwidth of the second signal, the frequency domain power spectral density of the first signal is less than the frequency domain power spectral density of the second signal.

In a possible implementation of the second aspect, before the receiving the first signal sent by the terminal device in the first time unit on the first carrier at the third transmit power, and the second signal sent by the terminal device in the second time unit on the second carrier at the fourth transmit power, the method further includes: sending first indication information to the terminal device, where the first indication information indicates a power allocation scheme for the terminal device to send the first signal on the first carrier and send the second signal on the second carrier. The power allocation scheme includes: When the first indication information indicates a first power allocation scheme, the frequency domain power spectral density for sending the first signal is equal to the frequency domain power spectral density for sending the second signal, or the third transmit power is equal to the fourth transmit power; or when the first indication information indicates a second power allocation scheme, the power spectral density of the first signal on the first frequency-domain resource on the first carrier is greater than the power spectral density of the first signal on the second frequency-domain resource on the first carrier, and the power spectral density of the second signal on the third frequency-domain resource on the second carrier is greater than the power spectral density of the second signal on the second frequency-domain resource on the fourth carrier.

According to a third aspect, a communication system is provided. The system includes a terminal device and a network device. The terminal device is configured to perform the method according to any one of the first aspect or the possible implementations of the first aspect, and network device is configured to perform the method according to any one of the second aspect or the possible implementations of the second aspect.

According to a fourth aspect, a communication apparatus is provided. The communication apparatus includes a unit configured to perform each step in any one of the first aspect or the possible implementations of the first aspect, or a unit configured to perform each step in any one of the second aspect or the possible implementations of the second aspect.

According to a fifth aspect, a communication apparatus is provided. The communication apparatus includes at least one processor and a memory, the processor is coupled to the memory, and the memory stores program instructions. When the program instructions stored in the memory are executed by the processor, the method according to any one of the first aspect or the possible implementations of the first aspect is performed, or the method according to any one of the second aspect or the possible implementations of the second aspect is performed.

According to a sixth aspect, a communication apparatus is provided. The communication apparatus includes at least one processor and an interface circuit. The at least one processor is configured to perform the method according to any one of the first aspect or the possible implementations of the first aspect, or the method according to any one of the second aspect or the possible implementations of the second aspect.

According to a seventh aspect, a computer program product is provided. The computer program product includes a computer program. When the computer program is executed by a processor, the computer program is used to perform the method according to any one of the first aspect or the possible implementations of the first aspect, or the method according to any one of the second aspect or the possible implementations of the second aspect.

According to an eighth aspect, a computer-readable storage medium is provided. The computer-readable storage medium stores a computer program. When the computer program is executed, the computer program is used to perform the method according to any one of the first aspect or the possible implementations of the first aspect, or the method according to any one of the second aspect or the possible implementations of the second aspect.

According to a ninth aspect, a chip is provided. The chip includes a processor, configured to: invoke a computer program from a memory and run the computer program, to cause a communication device in which the chip is installed to perform the method according to any one of the first aspect or the possible implementations of the first aspect, or the method according to any one of the second aspect or the possible implementations of the second aspect.

### BRIEF DESCRIPTION OF DRAWINGS

FIG. 1 is a diagram of a scenario of determining signal power based on a signal priority in a related technology;
FIG. 2 is a diagram of a scenario to which a communication method is applicable according to an embodiment of this application;
FIG. 3a to FIG. 3f are a diagram of six sub-scenarios based on a sensing scenario;
FIG. 4 is a diagram of structures of a network device 20 and a terminal device 30 according to an embodiment of this application;
FIG. 5 is an interaction diagram of a communication method 500 according to an embodiment of this application;
FIG. 6 is a diagram of a power allocation scheme according to an embodiment of this application;
FIG. 7 is a diagram of another power allocation scheme according to an embodiment of this application;
FIG. 8 is a diagram of still another power allocation scheme according to an embodiment of this application;
FIG. 9 is a schematic block diagram of a communication apparatus 900 according to an embodiment of this application;
FIG. 10 is a schematic block diagram of another communication apparatus 1000 according to an embodiment of this application;
FIG. 11 is a schematic block diagram of a communication apparatus 1100 according to an embodiment of this application;
FIG. 12 is a schematic block diagram of another communication apparatus 1200 according to an embodiment of this application;
FIG. 13 is a diagram of a structure of a terminal device 1300 according to this application;
FIG. 14 is a diagram of a structure of a network device 1400 according to an embodiment of this application; and
FIG. 15 is a diagram of a chip system according to an embodiment of this application.

### DESCRIPTION OF EMBODIMENTS

The following clearly and completely describes technical solutions in embodiments of this application with reference to accompanying drawings in embodiments of this application.

The technical solutions in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system, or a new radio (New Radio, NR) system.

A terminal device in embodiments of this application may be user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may also be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

A network device in embodiments of this application may be a device configured to communicate with the terminal device. The network device may be a base transceiver station (base transceiver station, BTS) in a global system for mobile communications (global system for mobile communications, GSM) or code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future evolved PLMN network, or the like. This is not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. A term "product" used in this application covers a computer program that can be accessed from any computer-readable component, carrier, or medium. For example, a computer-readable medium may include but is not limited to a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, include and/or carry instructions and/or data.

In a process of evolution from a 5th generation mobile communication system to a 5G-advanced technology, integrated sensing and communication is considered one of key technologies that can extend a service capability of a mobile communication network. A core idea of the technology is to add a sensing capability to the mobile communication network, and construct a capability of detecting, tracking, and imaging a target, so that communication and sensing capabilities are integrated into one network, achieving harmonious coexistence and even mutual benefit and reciprocity.

A technical principle of sensing is different from that of communication. For communication, a transmit end modulates information on a radio wave for sending to a receive end, and the receive end demodulates a signal carried on the radio wave to obtain the information. For sensing, a transmit end needs to send a radio wave in a specific direction. When the radio wave irradiates a surface of a target, a reflected wave is generated, so that the receive end receives and processes the reflected wave to obtain information such as a location, a speed, and a type of the target.

There are usually two types of sensing in terms of modes: monostatic sensing and bistatic sensing. For the monostatic sensing, a transmit end and a receive end of a sensing signal are a same device. In a sensing signal process, a sensing station not only needs to send a sensing signal, but also needs to receive a reflected signal of the sensing signal from a surface of a target. Therefore, a monostatic sensing mode is also referred to as a self-transmit and self-receive mode. For the bistatic sensing, a transmit end and a receive end of a sensing signal are two different devices. In a sensing signal process, after a sensing station A sends a sensing signal, a sensing station B receives a reflected signal of the signal from a surface of a target. Therefore, a bistatic sensing mode is also referred to as an A-transmit and B-receive mode.

In a wireless communication system, there may be different types of communication based on different types of sending nodes and receiving nodes. Usually, sending information from the network device to the terminal device is referred to as downlink communication, and sending information from the terminal device to the network device is referred to as uplink communication. In a long term evolution (Long Term Evolution, LTE)/long term evolution advanced (Long Term Evolution Advanced, LTE-A) communication system and a new radio (New Radio, NR) system, different duplex modes may be mainly classified into a frequency division duplex (Frequency Division Duplex, FDD) mode and a time division duplex (Time Division Duplex, TDD) mode. For a wireless communication system operating in the TDD mode, a downlink carrier and an uplink carrier of the system are carriers at a unified carrier frequency. A multiple access mode usually uses an orthogonal frequency division multiple access (Orthogonal Frequency Division Multiple Access, OFDMA) mode. A main characteristic of the orthogonal frequency division multiple access mode is that: A transmission resource is divided into mutually orthogonal time-frequency resource elements (Resource Elements, REs), and signals sent by a transmit end are all carried on the REs and transmitted to a receive end. Because different REs are mutually orthogonal to each other, the receive end may separately receive a signal sent on each RE.

In an LTE system, a terminal device supports simultaneous access to two network devices. Such an access mode is referred to as dual connectivity (Dual Connectivity, DC). One network device is a primary network device, and the other network device is a secondary network device. One or more cells in which the primary network device provides a service for the terminal device are classified into a master cell group (Master Cell Group, MCG), and one or more cells in which the secondary network device provides a service for the terminal device are referred to as a secondary cell group (Secondary Cell Group, SCG). In a development and evolution process of the wireless communication system, an operator deploys both a 5G NR system and an LTE system. The terminal device also supports simultaneous access to an LTE network device and an NR network device. Because LTE is also referred to as evolved universal terrestrial radio access (Evolved Universal Terrestrial Radio Access, E-UTRA), such an access mode is referred to as evolved universal terrestrial radio access new radio dual connectivity (E-UTRA NR Dual Connectivity, EN-DC). In the EN-DC mode, the LTE network device is a primary network device, and the NR network device is a secondary network device. Certainly, with evolution of the system, new radio evolved universal terrestrial radio access dual connectivity (NR E-UTRA dual connectivity, NE-DC) may also be supported in the future, that is, the NR network device is a primary network device, and the LTE network device is a secondary network device. Because a terminal in EN-DC and a terminal in NE-DC each access network devices of two different radio access technologies, these DC modes may also be collectively referred to as multi-radio access technology dual connectivity (multi-RAT dual connectivity, MR-DC). In addition, a terminal device that supports only NR may also simultaneously access two different NR network devices. Such a connection mode is referred to as NR-NR DC.

To improve a rate at which the terminal device sends an uplink signal to the network device, the terminal device operating in the DC mode can usually send uplink signals to the network device on carriers in both the MCG and the SCG in a same time period. However, total power for sending the uplink signals by the terminal device on all the carriers is usually limited. For example, maximum total power cannot exceed 23 dBm. Therefore, if the total power for sending the uplink signals by the terminal device on the carriers in the MCG and the SCG exceeds maximum transmit power, the terminal device needs to actively reduce transmit power on one or more carriers.

In a related technology, priorities of different signals and channels are predefined in a protocol. The terminal device may determine priorities of the signals based on types of the uplink signals to be sent on the carriers in the MCG and the SCG in the same time period, and reduce power of a low-priority signal, to ensure power of a high-priority signal. Alternatively, when types of the uplink signals to be sent by the terminal device on the carriers in the MCG and the SCG in the same time period are the same, it may be predefined that a priority of a signal in the MCG is higher than a priority of a signal in the SCG. In other words, when the types of the uplink signals to be sent by the terminal device on the carriers in the MCG and the SCG in the same time period are the same, the terminal device reduces power for sending the uplink signal on the carrier in the SCG.

For example, the priorities of the signals are in descending order based on the following sequence: a physical uplink control channel (physical uplink control channel, PUCCH) carrying an acknowledgment ACK character, a negative acknowledgment NACK character, and a scheduling request (scheduling request, SR), a physical uplink shared channel (physical uplink shared channel, PUSCH) carrying an ACK and a NACK, a PUCCH carrying channel state information (channel state information, CSI), a PUSCH carrying CSI, a PUSCH carrying no ACK, NACK, or CSI, and a sounding reference signal (sounding reference signal, SRS).

For example, when the signal to be sent on the carrier in the MCG is a PUCCH carrying an ACK, a NACK, and an SR, and the signal to be sent on the carrier in the SCG is a PUSCH carrying an ACK and a NACK, a priority of the signal to be sent on the carrier in the MCG is higher than a priority of the signal to be sent on the carrier in the SCG. In this case, to ensure that the total power for simultaneously sending the uplink signals to the network device on the carriers in the MCG and the SCG does not exceed the maximum power of the terminal device, the terminal device may actively reduce the power for sending the signal on the carrier in the SCG. Alternatively, when the signal to be sent on the carrier in the MCG is a PUSCH carrying an ACK and a NACK, and the signal to be sent on the carrier in the SCG is a PUCCH carrying an ACK, a NACK, and an SR, a priority of the signal to be sent on the carrier in the SCG is higher than a priority of the signal to be sent on the carrier in the MCG. In this case, to ensure that the total power for sending the uplink signals to the network device on the carriers in the MCG and the SCG does not exceed the maximum power of the terminal device, the terminal device may actively reduce the power for sending the signal on the carrier in the MCG.

For another example, when the signal to be sent on the carrier in the MCG is a PUCCH carrying an ACK, a NACK, and an SR, and the signal to be sent on the carrier in the SCG is also a PUCCH carrying an ACK, a NACK, and an SR, the terminal device reduces the power for sending the uplink signal on the carrier in the SCG.

In the related technology, only a type of a communication signal and a type of a CG are considered to determine the priority. In this manner of determining the priority based on the type of the communication signal to reduce power for sending a signal on a low-priority carrier, a requirement of an integrated sensing and communication scenario is not considered. In an uplink multi-carrier integrated sensing and communication scenario, when the terminal device simultaneously sends sensing signals on two different carriers, an existing priority and communication method cannot be applied.

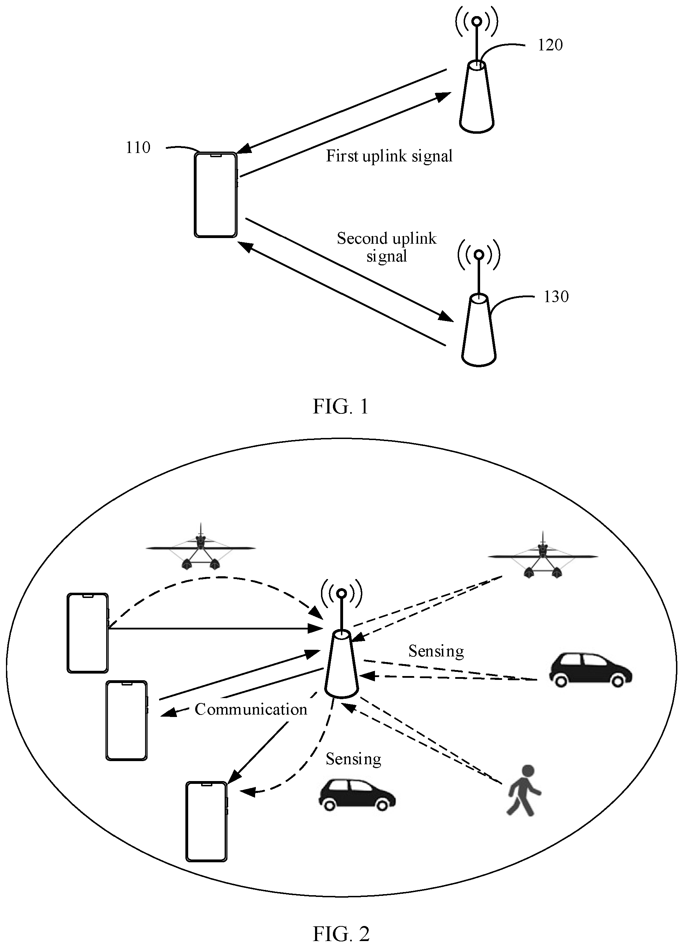

For example, FIG. 1 is a diagram of a scenario of determining signal power based on a signal priority in a related technology. As shown in FIG. 1, a terminal device 110 separately communicates with a network device 120 and a network device 130. Assuming that the network device 120 serves as a primary base station to provide a service for the terminal device 110, one or more cells in which the network device 120 provides a service for the terminal device 110 are an MCG. Assuming that the network device 130 serves as a secondary base station to provide a service for the terminal device 110, one or more cells in which the network device 130 provides a service for the terminal device 110 are an SCG. To increase power for sending uplink signals by the terminal device 110 to the network devices, the terminal device 110 may simultaneously send a first uplink signal to the network device 120 on a first carrier in the MCG and a second uplink signal to the network device 130 on a second carrier in the SCG in a same time period. However, total power for sending the uplink signals by the terminal device 110 on all carriers is limited. If total power for sending the first uplink signal and the second uplink signal by the terminal device 110 on the carriers in the MCG and the SCG exceeds maximum transmit power, the terminal device needs to actively reduce transmit power on one or more carriers.

In a possible scenario, both the network device 120 and the network device are network devices supporting NR, or both the network device 120 and the network device 130 are network devices supporting LET.

In another possible scenario, the network device 120 and the network device 130 are network devices belonging to two different radio access technologies. For example, the network device 120 may be an NR network device, and the network device 130 may be an LTE network device. The terminal device 110 simultaneously accesses the NR network device and the LTE network device by using a dual connectivity DC mode. The terminal device 110 sends a first uplink signal to the NR network device by using an NR uplink carrier, and sends a second uplink signal to the LTE network device by using an LTE uplink carrier. Certainly, a carrier aggregation (Carrier Aggregation, CA) mode may also be used for access to the NR network device and the LTE network device.

In the example in FIG. 1, when transmit power for sending the first uplink signal by the terminal device 110 and transmit power for sending the second uplink signal by the terminal device 110 exceed the maximum transmit power of the terminal device 110, the terminal device 110 determines, based on a type of the first uplink signal and a type of the second uplink signal, to reduce the transmit power of the first uplink signal or reduce the transmit power of the second sent signal, so that total power of the transmit power of the first uplink signal and the transmit power of the second uplink signal does not exceed the maximum transmit power of the terminal device 110.

However, the foregoing related technology cannot support a problem of uplink power control in an integrated sensing and communication scenario. Therefore, how to control, in an uplink multi-carrier integrated sensing and communication scenario when a terminal device simultaneously sends sensing signals on two different carriers, transmit power of a plurality of signals to be sent by the terminal device is a problem that needs to be resolved currently.

In view of this, this application provides a communication method. The method includes three schemes for a terminal device: equal power allocation based on maximum transmit power, power spectral density alignment, and preferential power allocation to high and low frequency resource units, so that the terminal device can achieve optimal joint sensing performance of a plurality of carriers without exceeding the maximum transmit power.

Before the communication method provided in embodiments of this application is described, the following first describes application scenarios to which embodiments of this application are applicable.

An application scenario of this application is an integrated sensing and communication scenario. FIG. 2 is a diagram of a scenario to which a communication method is applicable according to an embodiment of this application. As shown in FIG. 2, when performing communication, a network device and terminal devices in a communication network can also sense an object that does not have a communication function. Sensed targets are not limited to a vehicle, a low-altitude uncrewed aerial vehicle, and a pedestrian, and also include another moving or static object.

It should be understood that integrated sensing and communication (integrated sensing and communication, ISAC) refers to implementing support of a same system for both communication and sensing functions through joint design. In comparison with a communication system and a sensing system that are separated, the ISAC has advantages in terms of size, weight, power consumption, cost, efficiency, and the like.

It should be further understood that communication is information transmission between two or more points, and sensing is detection of a parameter of a physical environment, for example, speed measurement and target positioning. In other words, integrated sensing and communication refers to integrating the communication function and the sensing function, so that a future communication system has both the communication function and the sensing function. During information transmission through wireless communication, a physical feature of a surrounding environment is sensed by actively recognizing and analyzing a channel feature, so that the communication function and the sensing function mutually enhance each other.

In an ISAC network evolved based on an existing cellular communication system, one base station may request a plurality of terminal devices to measure a passive target object. The passive target object in this application may be a target object that cannot receive or send a signal. For example, the target object may be a vehicle, a low-altitude uncrewed aerial vehicle, a pedestrian, or a static object like a building shown in FIG. 2.

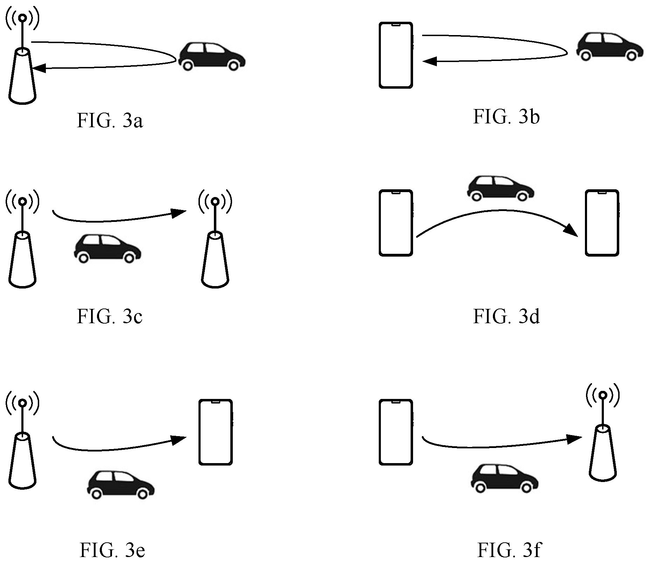

FIG. 3a to FIG. 3f are a diagram of six sub-scenarios based on a sensing scenario. As shown in FIG. 3a, as a transmit end and a receive end of a sensing signal, a network device not only needs to send a sensing signal to measure a sensing parameter of a target object (for example, a vehicle), but also needs to receive a reflected signal of the sensing signal from a surface of the target object. As shown in FIG. 3b, as a transmit end and a receive end of a sensing signal, a terminal device not only needs to send a sensing signal to measure a sensing parameter of a target object (for example, a vehicle), but also needs to receive a reflected signal of the sensing signal from a surface of the target object. As shown in FIG. 3c, a network device A serves as a transmit end of a sensing signal, and a network device B serves as a receive end of the sensing signal. The network device A sends the sensing signal to measure a sensing parameter of a target object (for example, a vehicle), and the network device B receives a signal of the sensing signal from a surface of the target object. As shown in FIG. 3d, a terminal device A serves as a transmit end of a sensing signal, and a terminal device B serves as a receive end of the sensing signal. The terminal device A sends the sensing signal to measure a sensing parameter of a target object (for example, a vehicle), and the terminal device B receives a signal of the sensing signal from a surface of the target object. As shown in FIG. 3e, a network device serves as a transmit end of a sensing signal, and a terminal device serves as a receive end of the sensing signal. The network device sends the sensing signal to measure a sensing parameter of a target object (for example, a vehicle), and the terminal device receives a signal of the sensing signal from a surface of the target object. As shown in FIG. 3f, a terminal device serves as a transmit end of a sensing signal, and a network device serves as a receive end of the sensing signal. The terminal device sends the sensing signal to measure a sensing parameter of a target object (for example, a vehicle), and the network device receives a signal of the sensing signal from a surface of the target object.

The scenario to which embodiments of this application are applicable is mainly a scenario in which a terminal device sends a sensing signal, namely, the scenario shown in FIG. 3b, FIG. 3d, or FIG. 3f.

It should be noted that the terminal device in the foregoing application scenario is configured to send an uplink signal to the network device or receive a downlink signal from the network device, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self driving (self driving), remote medical (remote medical), a smart grid (smart grid), smart furniture, smart office, smart wearable, smart transportation, a smart city (smart city), an uncrewed aerial vehicle, and a robot. For example, the terminal device may be a handheld terminal in cellular communication, a communication device in D2D, an internet of things device in MTC, a surveillance camera in smart transportation and a smart city, or a communication device in an uncrewed aerial vehicle. The terminal device may be sometimes referred to as user equipment (user equipment, UE), a user terminal, a user apparatus, a subscriber unit, a subscriber station, a terminal, an access terminal, an access station, a UE station, a remote station, a mobile device, a wireless communication device, or the like.

It should be further noted that the network device in the foregoing application scenario is configured to receive an uplink signal from the terminal device or send a downlink signal to the terminal device, may be an LTE and/or NR network device, and may be a NodeB (NodeB), an evolved NodeB (evolved NodeB, eNodeB), a next generation NodeB (next generation NodeB, gNB) in a 5G mobile communication system, a transmission reception point (transmission reception point, TRP), a 3GPP subsequently evolved base station, an access node in a Wi-Fi system, a wireless relay node, a wireless backhaul node, or the like.

In some embodiments, a network device 20 and a terminal device 30 may also be referred to as communication apparatuses, and each may be a general-purpose device or a dedicated device. This is not specifically limited in embodiments of this application.

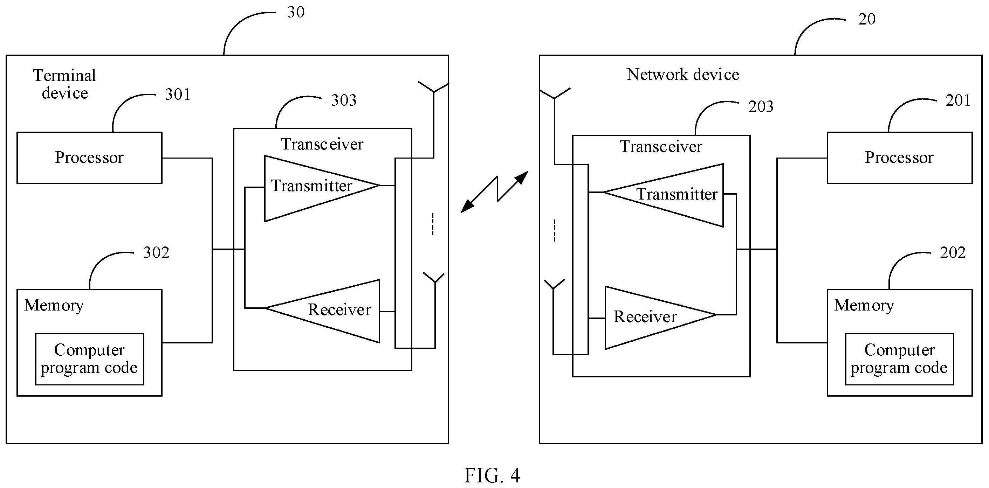

FIG. 4 is a diagram of structures of a network device 20 and a terminal device 30 according to an embodiment of this application.

The terminal device 30 includes at least one processor (an example in which one processor 301 is included is used for description in FIG. 4) and at least one transceiver (an example in which one transceiver 303 is included is used for description in FIG. 4). Optionally, the terminal device 30 may further include at least one memory (an example in which one memory 302 is included is used for description in FIG. 4), at least one output device (an example in which one output device 304 is included is used for description in FIG. 4), and at least one input device (an example in which one input device 305 is included is used for description in FIG. 4).

The processor 301, the memory 302, and the transceiver 303 are connected through a communication line. The communication line may include a path for transmission of information between the foregoing components.

The processor 301 may be a general-purpose central processing unit (central processing unit, CPU), a microprocessor, an application-specific integrated circuit (application-specific integrated circuit, ASIC), or one or more integrated circuits configured to control program execution of the solutions in this application. During specific implementation, in an embodiment, the processor 301 may alternatively include a plurality of CPUs, and the processor 301 may be a single-core (single-CPU) processor or a multi-core (multi-CPU) processor. The processor herein may refer to one or more devices, circuits, or processing cores configured to process data (for example, computer program instructions).

The memory 302 may be an apparatus having a storage function. For example, the memory 302 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, or the like), a magnetic disk storage medium or another magnetic storage device, or any other medium that can be used to carry or store expected program code in an instruction form or a data structure form and that can be accessed by a computer, but is not limited thereto. The memory 302 may exist independently, and is connected to the processor 301 through the communication line. The memory 302 may also be integrated with the processor 301.

The memory 302 is configured to store computer-executable instructions for executing the solutions in this application, and the processor 301 controls the execution. Specifically, the processor 301 is configured to execute the computer-executable instructions stored in the memory 302, to implement the method in embodiments of this application.

Alternatively, in this application, the processor 301 may perform a processing-related function in signal sending and receiving methods provided in this application, and the transceiver 303 is responsible for communicating with another device or a communication network. This is not specifically limited in embodiments of this application.

The computer-executable instructions in this application may also be referred to as application program code or computer program code. This is not specifically limited in embodiments of this application.

The transceiver 303 may use any apparatus like a transceiver to communicate with another device or a communication network, for example, an Ethernet, a radio access network (radio access network, RAN), or a wireless local area network (wireless local area network, WLAN). The transceiver 303 includes a transmitter (transmitter, Tx) and a receiver (receiver, Rx).

The output device 304 communicates with the processor 301, and may display information in a plurality of manners. For example, the output device 304 may be a liquid crystal display (liquid crystal display, LCD), a light emitting diode (light emitting diode, LED) display device, a cathode ray tube (cathode ray tube, CRT) display device, a projector (projector), or the like.

The input device 305 communicates with the processor 301, and may receive an input of a user in a plurality of manners. For example, the input device 305 may be a mouse, a keyboard, a touchscreen device, a sensing device, or the like.

The network device 20 includes at least one processor (an example in which one processor 201 is included is used for description in FIG. 4) and at least one transceiver (an example in which one transceiver 203 is included is used for description in FIG. 4). Further, the network device 20 may further include at least one memory (an example in which one memory 202 is included is used for description in FIG. 4) and at least one network interface (an example in which one network interface 204 is included is used for description in FIG. 4). The processor 201, the memory 202, the transceiver 203, and the network interface 204 are connected through a communication line. The network interface 204 is configured to connect to a core network device through a link, or connect to a network interface of another network device through a wired or wireless link (not shown in FIG. 4). This is not specifically limited in embodiments of this application. In addition, for related descriptions of the processor 201, the memory 202, and the transceiver 203, refer to descriptions of the processor 301, the memory 302, and the transceiver 303 in the terminal device 30. Details are not described herein again.

It may be understood that the structures shown in FIG. 4 do not constitute a specific limitation on the terminal device 30 and the network device 20. For example, in some other embodiments of this application, the terminal device 30 and the network device 20 each may include more or fewer components than those shown in the figure, or combine some components, or split some components, or use different component arrangements. The components shown in the figure may be implemented by hardware, software, or a combination of software and hardware.

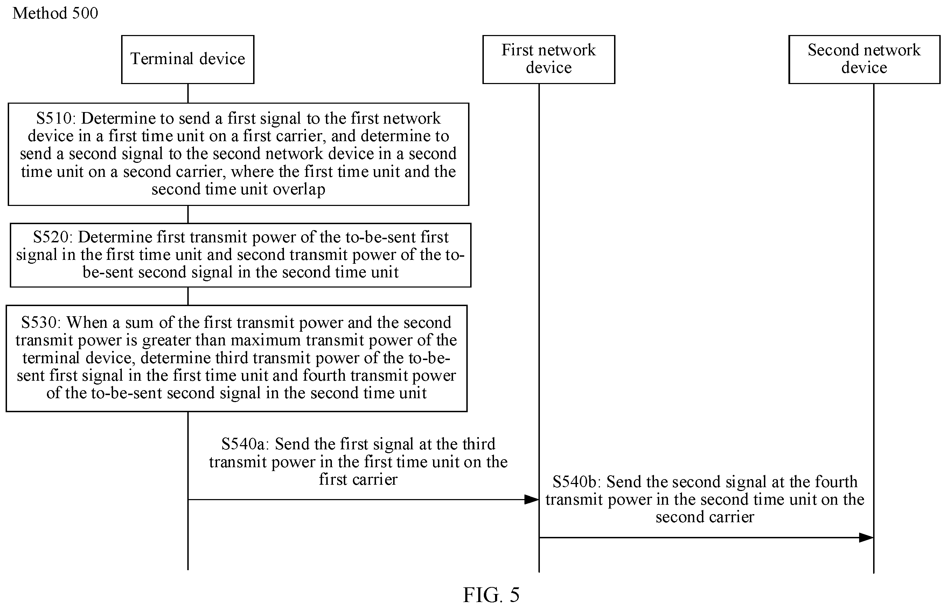

The following describes, in detail with reference to FIG. 5, the communication method provided in this application. FIG. 5 is an interaction diagram of a communication method 500 according to an embodiment of this application. The method 500 may be applied to the foregoing scenario, or certainly may be applied to another communication scenario. This is not limited in embodiments of this application.

It should be understood that, in this embodiment of this application, the method 500 is described by using an example in which steps in the method 500 are performed by a terminal device and a network device. By way of example, and not limitation, the steps in the method 500 may also be performed by a chip used in the terminal device and a chip used in the network device.

As shown in FIG. 5, the method 500 includes the following steps.

S510: The terminal device determines to send a first signal to a first network device in a first time unit on a first carrier, and determines to send a second signal to a second network device in a second time unit on a second carrier, where the first time unit and the second time unit overlap.

In this embodiment of this application, the first carrier and the second carrier are different carriers.

In some possible implementations, the first carrier and the second carrier may be different carriers of a same CG, namely, two carriers in carrier aggregation. In other words, when the first carrier and the second carrier are different carriers of a same CG, the terminal device sends the first signal to the first network device in the first time unit on the first carrier, and sends the second signal to the first network device in the second time unit on the second carrier. That is, in this case, the first network device and the second network device are a same network device.

It should be understood that, that the first network device and the second network device are a same network device may be understood as that the first network device and the second network device are physically the same network device but logically different network devices, or may be understood as that the first network device and the second network device are logically the same network device but physically different network devices.

In some other possible implementations, the first carrier and the second carrier may be carriers of different CGs. The first carrier and the second carrier may respectively belong to an MCG and an SCG. In this case, the terminal device sends the first signal to the first network device in the first time unit on the first carrier, and sends the second signal to the second network device in the second time unit on the second carrier. That is, in this case, the first network device and the second network device are different network devices.

It should be understood that, that the first network device and the second network device are different network devices may be understood as that the first network device and the second network device are physically different network devices and logically different network devices.

Alternatively, the first carrier and the second carrier may respectively belong to two different SCGs, or the first carrier and the second carrier may respectively belong to two different MCGs. That is, in this case, the first network device and the second network device may be a same network device.

It should be understood that the first carrier and the second carrier may belong to a same radio access technology. For example, both the first carrier and the second carrier are NR carriers, or both the first carrier and the second carrier are LTE carriers. The first carrier and the second carrier may also belong to different radio access technologies. For example, the first carrier is an NR carrier, and the second carrier is an LTE carrier; or the first carrier is an LTE carrier, and the second carrier is an NR carrier; or the first carrier is an NR carrier, and the second carrier is a 6G carrier; or the first carrier is a 6G carrier, and the second carrier is an NR carrier. Certainly, the first carrier and the second carrier may also belong to other radio access technologies. Radio access technologies supported by the first carrier and the second carrier are not specifically limited in embodiments of this application.

It should be noted that the first time unit may also be a first time period, and the first time period may be one or more first time units. The second time unit may also be a second time period, and the second time period may also be one or more second time units.

Optionally, the first time unit and the second time unit each may be one of the following time units:
First type: subframe (subframe), where a length of one subframe is 1 ms, and 14 orthogonal frequency division multiplexing (orthogonal frequency division multiplexing, OFDM) symbols are included in a numerology (numerology) of a 15 kHz subcarrier spacing. In one subframe, for various numerologies of a 15 kHz subcarrier spacing or a subcarrier spacing of more than 15 kHz, symbol boundaries are aligned. Unless otherwise specified, all "symbols" below are OFDM symbols.

Second type: slot (slot), which is a possible time length of a scheduling unit. In NR, one slot includes 14 symbols, and a time length of one slot is related to a value of a subcarrier spacing. For example, when the subcarrier spacing is 15 kHz, a length of one slot is 1 ms; when the subcarrier spacing is 30 kHz, a length of one slot is 0.5 ms; when the subcarrier spacing is 60 kHz, a length of one slot is 0.25 ms; and when the subcarrier spacing is 120 kHz, a length of one slot is 0.125 ms.

Third type: mini-slot (mini-slot), which is a minimum time length of a scheduling unit. One mini-slot may include two or more symbols (fewer than 14 symbols) in time.

Fourth type: a symbol (Symbol), which may be an OFDM symbol, or may be a DFT-S-OFDM symbol. This is not limited herein.

In other words, the first time unit may be any one of a first subframe, a first slot, a first mini-slot, or a first symbol, and the first time period may be any one of a plurality of first subframes, a plurality of first slots, a plurality of first mini-slots, or a plurality of first symbols. The second time unit may also be any one of a first subframe, a first slot, a first mini-slot, or a first symbol, and the second time period may be any one of a plurality of first subframes, a plurality of first slots, a plurality of first mini-slots, or a plurality of first symbols.

In some embodiments, the first signal may be a sensing signal, or may be an integrated sensing and communication signal, and the second signal may also be a sensing signal, or may be an integrated sensing and communication signal. A type of the first signal and a type of the second signal may be the same or different. In other words, both the first signal and the second signal may be sensing signals, or both the first signal and the second signal are sensing and communication signals. Alternatively, the first signal and the second signal may be a sensing signal and an integrated sensing and communication signal respectively. To be specific, the first signal is a sensing signal, and the second signal is an integrated sensing and communication signal; or the first signal is an integrated sensing and communication signal, and the second signal is a sensing signal, or the like. The types of the first signal and the second signal are not specifically limited in embodiments of this application.

It should be understood that the sensing signal may be understood as a signal used to sense an object or an environment. The integrated sensing and communication signal may be understood as a signal used for both communication and sensing. The integrated sensing and communication signal may be understood as a signal used for both communication and sensing. The signal used for communication includes a signal used for data transmission, for example, a PUSCH, and a signal used for measuring a communication channel, for example, a PUCCH.

S520: The terminal device determines first transmit power of the to-be-sent first signal in the first time unit and second transmit power of the to-be-sent second signal in the second time unit.

In a possible implementation, the first transmit power for sending the first signal by the terminal device is pre-indicated by the network device, and the second transmit power for sending the second signal by the terminal device is also pre-indicated by the network device.

In another possible implementation, the first transmit power for sending the first signal by the terminal device may be calculated according to a calculation formula indicated by the network device, and the second transmit power for sending the second signal by the terminal device may also be calculated according to a calculation formula indicated by the network device.

Certainly, the terminal device may alternatively determine the first transmit power and the second transmit power in another manner. A manner in which the terminal device determines the first transmit power of the to-be-sent first signal in the first time unit and the second transmit power of the to-be-sent second signal in the second time unit is not specifically limited in embodiments of this application.

S530: When a sum of the first transmit power and the second transmit power is greater than maximum transmit power of the terminal device, the terminal device determines third transmit power of the to-be-sent first signal in the first time period and fourth transmit power of the to-be-sent second signal in the second time period, where the third transmit power is less than or equal to the first transmit power, and the fourth transmit power is less than or equal to the second transmit power.

In this embodiment of this application, the terminal device may determine, based on the first transmit power and the second transmit power, whether the sum of the first transmit power and the second transmit power is greater than the maximum transmit power of the terminal device. When the sum of the first transmit power and the second transmit power is greater than the maximum transmit power of the terminal device, the terminal device may re-determine, based on the maximum transmit power, transmit power, namely, the third transmit power, for sending the first signal in the first time unit on the first carrier, and re-determine transmit power, namely, the fourth transmit power, for sending the second signal in the second time unit on the second carrier.

In some embodiments, when allocating the third transmit power and the fourth transmit power based on the maximum transmit power, the terminal device ensures that a frequency domain power spectral density for sending the first signal at the third transmit power is equal to a frequency domain power spectral density for sending the second signal at the fourth transmit power. When bandwidths of the first signal and the second signal are not equal, the equal frequency domain power spectral densities cause a signal with a larger bandwidth to have higher power.

It should be understood that a frequency domain power spectrum may be understood as transmit power on each frequency-domain resource.

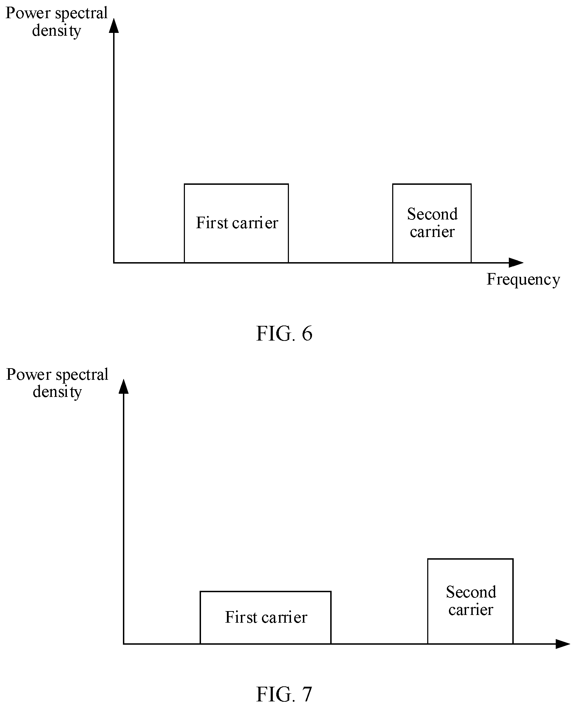

For example, FIG. 6 is a diagram of a power allocation scheme according to an embodiment of this application. As shown in FIG. 6, the frequency domain power spectral density for sending the first signal by the terminal device in the first time unit on the first carrier is equal to the frequency domain power spectral density for sending the second signal by the terminal device in the second time unit on the second carrier. In addition, it can be further learned from FIG. 6 that the bandwidth of the first signal is greater than the bandwidth of the second signal, so that signal power of the first signal is greater than signal power of the second signal.

In this implementation, the third transmit power and the fourth transmit power satisfy that the frequency domain power spectral density for sending the first signal by the terminal device is equal to the frequency domain power spectral density for sending the second signal by the terminal device, so that a sum of the third transmit power and the fourth transmit power is less than or equal to the maximum transmit power of the terminal device.

In some other embodiments, the terminal device ensures, based on the maximum transmit power, that the third transmit power for sending the first signal is equal to the fourth transmit power for sending the second signal. In other words, the terminal device may equally allocate the third transmit power and the fourth transmit power based on the maximum transmit power, so that the third transmit power is equal to the fourth transmit power. When bandwidths of the first signal and the second signal are not equal, a signal with a larger bandwidth has a lower frequency power spectral density.

For example, FIG. 7 is a diagram of another power allocation scheme according to an embodiment of this application. As shown in FIG. 7, an area of a square is transmit power of a signal. Power for sending the first signal by the terminal device is equal to power for sending the second signal by the terminal device. When the bandwidth of the first signal sent by the terminal device in the first time unit on the first carrier is greater than the bandwidth of the second signal sent by the terminal device in the second time unit on the second carrier, the frequency domain power spectral density for sending the first signal is lower than the frequency domain power spectral density for sending the second signal.

In this implementation, the third transmit power and the fourth transmit power satisfy that the power for sending the first signal by the terminal device is equal to the power for sending the second signal by the terminal device, so that a sum of the third transmit power and the fourth transmit power is less than or equal to the maximum transmit power of the terminal device.

In still some other embodiments, the terminal device ensures, based on the maximum transmit power, to preferentially allocate power to a resource unit with a lower frequency on a carrier with a lower frequency and a resource unit with a higher frequency on a carrier with a higher frequency.

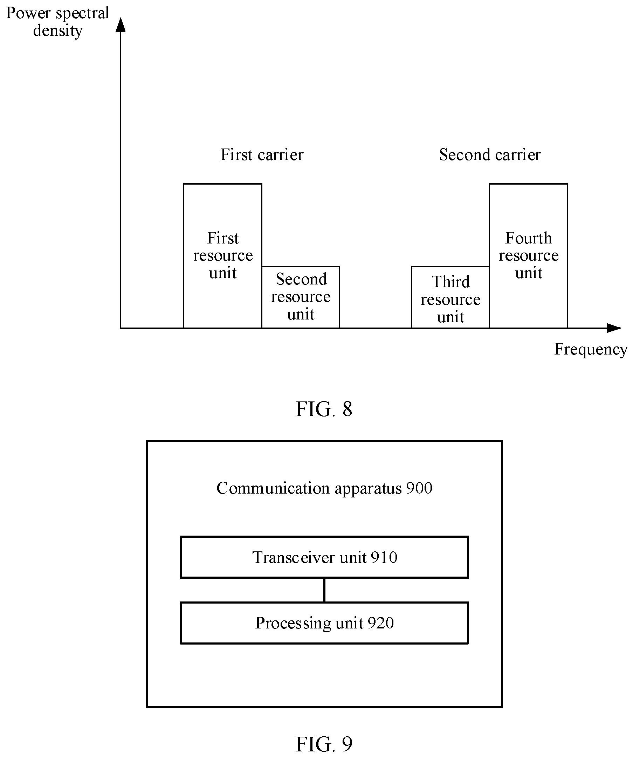

For example, FIG. 8 is a diagram of still another power allocation scheme according to an embodiment of this application. As shown in FIG. 8, a frequency of the first carrier is less than a frequency of the second carrier, a frequency of a first frequency-domain resource on the first carrier is less than a frequency of a second frequency-domain resource on the first carrier, and a frequency of a third frequency-domain resource on the second carrier is less than a frequency of a fourth frequency-domain resource on the second carrier. When allocating the third transmit power and the fourth transmit power based on the maximum transmit power, the terminal device preferentially allocates power to the first frequency-domain resource on the first carrier and the fourth frequency-domain resource on the second carrier.

It should be understood that, that the transmit power of the terminal device is preferentially allocated to the first frequency-domain resource on the first carrier and the fourth frequency-domain resource on the second carrier may be understood as that the terminal device preferentially allocates transmit power to the first frequency-domain resource on the first carrier and the fourth frequency-domain resource on the second carrier based on values of the transmit power, and allocates transmit power to the second frequency-domain resource on the first carrier and the third frequency-domain resource on the second carrier based on values of remaining transmit power after allocation to the first frequency-domain resource on the first carrier and the fourth frequency-domain resource on the second carrier is completed. In other words, a power spectral density of the first signal on the first frequency-domain resource on the first carrier is greater than a power spectral density of the first signal on the second frequency-domain resource on the first carrier, and a power spectral density of the second signal on the third frequency-domain resource on the second carrier is greater than a power spectral density of the second signal on the second frequency-domain resource on the fourth carrier.

It should be further understood that the first frequency-domain resource may include one resource unit, for example, one subcarrier, or may include a plurality of resource units, for example, a plurality of subcarriers. Similarly, the second frequency-domain resource may also include one or more resource units. The third frequency-domain resource may also include one or more resource units. The fourth frequency-domain resource may also include one or more resource units.

In this implementation, the third transmit power and the fourth transmit power satisfy that the power is preferentially allocated to the resource unit with the lower frequency on the carrier with the lower frequency and the resource unit with the higher frequency on the carrier with the higher frequency, so that signal sensing precision is improved while it is ensured that a sum of the third transmit power and the fourth transmit power is less than or equal to the maximum transmit power of the terminal device.

In a possible implementation, the terminal device may receive first indication information of the network device, where the first indication information indicates a mode in which the terminal device sends sensing signals on the first carrier and the second carrier. Signal sensing modes include a joint sensing mode and an independent sensing mode. In the joint sensing mode, the network device may perform joint sensing on the first signal and the second signal that are sent by the terminal device, so that sensing performance is improved. In the independent sensing mode, the network device performs sensing by using the first signal and the second signal respectively.

Optionally, when the first indication information indicates that the mode in which the terminal device sends the sensing signals on the first carrier and the second carrier is a joint sensing mode, the terminal device may determine the third transmit power and the fourth transmit power in any one of the foregoing three schemes.

When the first indication information indicates that the mode in which the terminal device sends the sensing signals on the first carrier and the second carrier is an independent sensing mode, the terminal device may perform resource allocation based on a priority. For example, a priority of a primary carrier is higher than that of a secondary carrier, and a priority of a master CG is higher than that a secondary CG. In this way, power is preferentially allocated to a signal with a higher priority, and if there is remaining power, the remaining power is allocated to a signal with a lower priority.

In other words, the first indication information may also be understood as indicating a power allocation scheme for the terminal device to send the first signal on the first carrier and send the second signal on the second carrier. That the terminal device determines the third transmit power and the fourth transmit power based on the first indication information includes: When the first indication information indicates a first power allocation scheme, the terminal device determines that the frequency domain power spectral density for sending the first signal is equal to the frequency domain power spectral density for sending the second signal, or the third transmit power is equal to the fourth transmit power, for example, as shown in the examples in FIG. 6 and FIG. 7.

Alternatively, when the first indication information indicates a second power allocation scheme, the power spectral density of the first signal on the first frequency-domain resource on the first carrier is greater than the power spectral density of the first signal on the second frequency-domain resource on the first carrier, and the power spectral density of the second signal on the third frequency-domain resource on the second carrier is greater than the power spectral density of the second signal on the second frequency-domain resource on the fourth carrier, for example, as shown in the example in FIG. 8.

S540a: The terminal device sends the first signal to the first network device at the third transmit power in the first time unit on the first carrier.

S540b: The terminal device sends the second signal to the second network device at the fourth transmit power in the second time unit on the second carrier.

The third transmit power for sending the first signal by the terminal device and the fourth transmit power for sending the second signal by the terminal device are determined based on the power allocation solution in step S530, where the sum of the third transmit power and the fourth transmit power is less than or equal to the maximum transmit power of the terminal device. In addition, based on the power determining manner in step S530, when the terminal device simultaneously sends sensing signals on two different carriers, effective power control can be performed.

Optionally, in a possible implementation, when a difference between the third transmit power determined in step S530 and the first transmit power in step S520 is greater than a first threshold, in step S540, the first signal may not be sent, and only the second signal is sent. Alternatively, when a difference between the fourth transmit power determined in step S530 and the second transmit power in step S520 is greater than a second threshold, in step S540, the second signal may not be sent, and only the first signal is sent.

It should be understood that the difference between the third transmit power and the first transmit power may be a difference between a logarithmic value of the first transmit power and a logarithmic value of the third transmit power, or the difference between the third transmit power and the first transmit power may be a difference between a linear value of the first transmit power and a linear value of the third transmit power.

For example, if the first transmit power is 20 dB and the third transmit power is 17 dB, a power difference is 3 dB. Assuming that the first threshold is 2 dB, the difference is greater than the first threshold. In this case, the terminal device may not send the first signal and send only the second signal.

Alternatively, if the first transmit power is 0.05 W and the third transmit power is 0.03 W, a power difference is 0.02 W. Assuming that the first threshold is 0.01 W, the difference is greater than the first threshold. In this case, the terminal device may not send the first signal and send only the second signal.

It should be noted that the first threshold may be determined based on a specific situation. A value of the first threshold is not specifically limited in embodiments of this application.

Certainly, the difference between the fourth transmit power and the second transmit power may also be a difference between a logarithmic value of the second transmit power and a logarithmic value of the fourth transmit power, or the difference between the fourth transmit power and the second transmit power may also be a difference between a linear value of the second transmit power and a linear value of the fourth transmit power. The second threshold may be determined based on a specific situation. A value of the second threshold is not specifically limited in embodiments of this application.

It should be noted that, in the example in FIG. 5, the terminal device sends the first signal to the first network device at the third transmit power in the first time unit on the first carrier, and sends the second signal to the second network device at the fourth transmit power in the second time unit on the second carrier. The first network device and the second network device may perform joint sensing on a to-be-measured object based on the received first signal and second signal. The first network device and the second network device may be a same device or may be different devices.

Scenarios to which embodiments of this application are applicable further include a scenario in which a terminal device serves as a transmit end and a receive end of a sensing signal. To be specific, a terminal device sends the sensing signal, a terminal device receives a reflected signal of the sensing signal from a surface of a to-be-measured object, and the terminal devices perform joint sensing on the to-be-measured object based on the received first signal and second signal. The terminal device that sends the sensing signal and the terminal device that receives the sensing signal may be the same terminal device, or may be different terminal devices. This is not specifically limited in embodiments of this application.

In conclusion, according to the communication method provided in embodiments of this application, an uplink power allocation solution for sensing signals and integrated sensing and communication signals is defined. The allocation solution includes three schemes: power spectral density alignment, equal power allocation, and preferential power allocation to high and low frequency resource units, to achieve optimal joint sensing performance of a plurality of carriers in DC scenarios. In this way, when a terminal device simultaneously sends sensing signals on two different carriers, effective power control can be performed.

It should be understood that, division into manners, cases, categories, and embodiments in embodiments of this application are merely for ease of description, and should not constitute a special limitation. Features in various manners, categories, cases, and embodiments may be combined without contradiction.

It should be further understood that, the foregoing descriptions are merely intended to help a person skilled in the art better understand embodiments of this application, instead of limiting the scope of embodiments of this application. It is clear that a person skilled in the art may make various equivalent modifications or changes based on the foregoing examples. For example, some steps in the method 500 may be unnecessary, or some steps may be newly added. Alternatively, any two or more of the foregoing embodiments are combined. A modified, changed, or combined solution also falls within the scope of embodiments of this application.

It should be further understood that the foregoing descriptions of embodiments of this application emphasize differences between embodiments. For same or similar parts that are not mentioned, refer to embodiments. For brevity, details are not described herein again.

It should be further understood that sequence numbers of the foregoing processes do not mean a sequence of performing the processes. The sequence of performing the processes should be determined based on functions and internal logic of the processes, and should not be construed as any limitation on implementation processes of embodiments of this application.

It should be further understood that, in embodiments of this application, "presetting" and "predefining" may be implemented by prestoring corresponding code or a corresponding table on a device (for example, including the terminal device and the network device), or in another manner that may be used to indicate related information. A specific implementation thereof is not limited in this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The foregoing describes in detail examples of the communication method provided in this application. It may be understood that, to implement the foregoing functions, an authentication server function, a terminal device, and a unified data management include corresponding hardware structures and/or software modules for performing the functions. A person skilled in the art should be easily aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

The following describes a communication apparatus provided in this application.

For example, FIG. 9 is a schematic block diagram of a communication apparatus 900 according to an embodiment of this application. The communication apparatus 900 may correspond to the terminal device described in embodiments of the method 500, or may be a chip or a component used in the terminal device. In addition, modules or units in the communication apparatus 900 are respectively configured to perform actions or processing processes performed by the terminal device described in embodiments of the method 500.

As shown in FIG. 9, the communication apparatus 900 includes a transceiver unit 910 and a processing unit 920. The transceiver unit 910 is configured to specifically send or receive a signal under driving of the processing unit 920.

In some embodiments,
the processing unit 920 is configured to determine first transmit power of a first signal in a first time unit on a first carrier, and determine second transmit power of a second signal in a second time unit on a second carrier, where the first time unit and the second time unit overlap in time; and
the processing unit 920 is further configured to: when a sum of the first transmit power and the second transmit power is greater than a transmit power threshold, determine third transmit power of the first signal in the first time unit, where the third transmit power is less than or equal to the first transmit power, and determine fourth transmit power of the second signal in the second time unit, where the fourth transmit power is less than or equal to the second transmit power, where a frequency domain power spectral density for sending the first signal is equal to a frequency domain power spectral density for sending the second signal; or
the third transmit power is equal to the fourth transmit power; or a power spectral density of the first signal on a first frequency-domain resource on the first carrier is greater than a power spectral density of the first signal on a second frequency-domain resource on the first carrier, a power spectral density of the second signal on a third frequency-domain resource on the second carrier is greater than a power spectral density of the second signal on a fourth frequency-domain resource on the second carrier, a frequency of the first carrier is less than a frequency of the second carrier, a frequency of the first frequency-domain resource is less than a frequency of the second frequency-domain resource, and a frequency of the third frequency-domain resource is less than a frequency of the fourth frequency-domain resource.

According to the communication apparatus provided in this application, in DC scenarios, if sending the first signal by the terminal device and sending the second signal by the terminal device overlap in time, and the sum of the first transmit power and the second transmit power is greater than the transmit power threshold, transmit power of the terminal device may be allocated in any one of the foregoing three schemes, so that the third transmit power for sending the first signal by the terminal device on the first carrier and the fourth transmit power for sending the second signal by the terminal device on the second carrier can be effectively controlled, to prevent the third transmit power and the fourth transmit power from being greater than maximum transmit power of the terminal device.

In some possible implementations, the processing unit 920 is further configured to preferentially allocate transmit power of the terminal device to the first frequency-domain resource on the first carrier and the fourth frequency-domain resource on the second carrier.

In some possible implementations, when the frequency domain power spectral density for sending the first signal is equal to the frequency domain power spectral density for sending the second signal, and a bandwidth of the first signal is greater than a bandwidth of the second signal, the third transmit power is greater than the fourth transmit power.

In some possible implementations, when the first transmit power is equal to the second transmit power, and a bandwidth of the first signal is greater than a bandwidth of the second signal, the frequency domain power spectral density of the first signal is less than the frequency domain power spectral density of the second signal.

In some possible implementations, the transceiver unit 910 is further configured to receive first indication information sent by a network device, where the first indication information indicates a power allocation scheme for the terminal device to send the first signal on the first carrier and send the second signal on the second carrier. Determining the third transmit power and the fourth transmit power based on the first indication information includes: when the first indication information indicates a first power allocation scheme, determining that the frequency domain power spectral density for sending the first signal is equal to the frequency domain power spectral density for sending the second signal, or the third transmit power is equal to the fourth transmit power; or when the first indication information indicates a second power allocation scheme, determining that the power spectral density of the first signal on the first frequency-domain resource on the first carrier is greater than the power spectral density of the first signal on the second frequency-domain resource on the first carrier, and the power spectral density of the second signal on the third frequency-domain resource on the second carrier is greater than the power spectral density of the second signal on the second frequency-domain resource on the fourth carrier.

It should be understood that, for a specific process in which the units in the communication apparatus 900 perform the foregoing corresponding steps, refer to the foregoing descriptions related to the terminal device in related embodiments with reference to the method 500 and FIG. 5. For example, the transceiver unit 910 may perform receiving and sending steps in the foregoing method embodiment, and the processing unit 920 may perform steps other than receiving and sending. Various specific processing is described in the method embodiment. For brevity, details are not described herein again.

Optionally, the transceiver unit 910 may include a receiving unit (module) and a sending unit (module), configured to perform steps of receiving information and sending information by the terminal device in embodiments of the method 500.

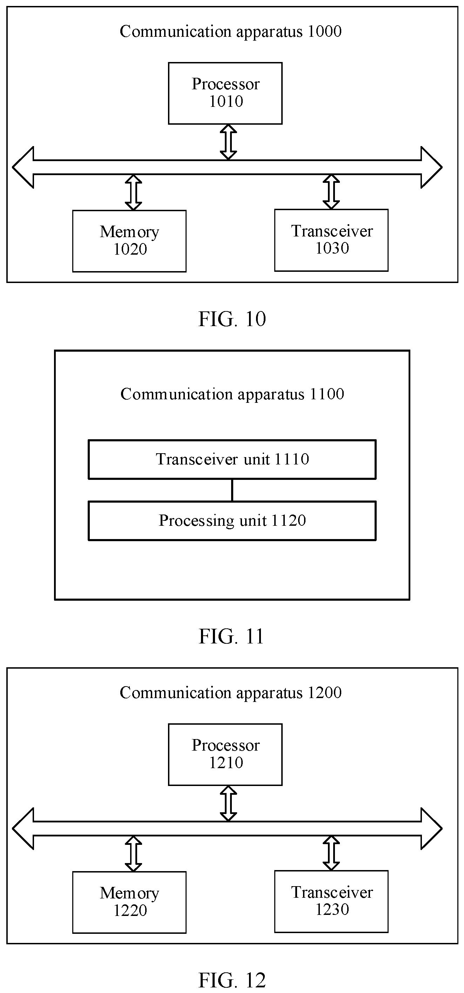

It should be understood that, the transceiver unit 910 may be a transceiver, an input/output interface, or an interface circuit. A storage unit may be a memory. The processing unit 920 may be implemented by a processor. FIG. 10 is a schematic block diagram of another communication apparatus 1000 according to an embodiment of this application. As shown in FIG. 10, the communication apparatus 1000 may include a processor 1010, a memory 1020, and a transceiver 1030.

The communication apparatus 900 shown in FIG. 9 or the communication apparatus 1000 shown in FIG. 10 can implement steps performed by the terminal device in embodiments of the method 500. For similar descriptions, refer to the descriptions in the foregoing corresponding method. To avoid repetition, details are not described herein again.

It should be further understood that the communication apparatus 900 shown in FIG. 9 or the communication apparatus 1000 shown in FIG. 10 may be a terminal device.

FIG. 11 is a schematic block diagram of a communication apparatus 110 according to an embodiment of this application. The communication apparatus 1100 may correspond to the network device described in the method 500, or may be a chip or a component used in the network device. In addition, modules or units in the communication apparatus 1100 are respectively configured to perform actions or processing processes performed by the network device in the method 500.

As shown in FIG. 11, the communication apparatus 1100 may include a transceiver unit 1110 and a processing unit 1120. The transceiver unit 1110 is configured to specifically send or receive a signal under driving of the processing unit 1120.

In some embodiments,
the transceiver unit 1110 is configured to receive a first signal sent by a terminal device in a first time unit on a first carrier at third transmit power, and a second signal sent by the terminal device in a second time unit on a second carrier at fourth transmit power, where
a frequency domain power spectral density for sending the first signal is equal to a frequency domain power spectral density for sending the second signal; or
the third transmit power is equal to the fourth transmit power; or
a power spectral density of the first signal on a first frequency-domain resource on the first carrier is greater than a power spectral density of the first signal on a second frequency-domain resource on the first carrier, a power spectral density of the second signal on a third frequency-domain resource on the second carrier is greater than a power spectral density of the second signal on a fourth frequency-domain resource on the second carrier, a frequency of the first carrier is less than a frequency of the second carrier, a frequency of the first frequency-domain resource is less than a frequency of the second frequency-domain resource, and a frequency of the third frequency-domain resource is less than a frequency of the fourth frequency-domain resource.

According to the communication apparatus provided in this application, in DC scenarios, the network device may receive the first signal sent by the terminal device at the third transmit power and the second signal sent by the terminal device at the fourth transmit power, where the third transmit power and the fourth transmit power satisfy any one of the foregoing three schemes, so that the third transmit power of the first signal received by the network device on the first carrier and the fourth transmit power of the second signal received by the network device on the second carrier can be effectively controlled, to prevent the third transmit power and the fourth transmit power from being greater than maximum transmit power of the terminal device.

In some possible implementations, when the frequency domain power spectral density for sending the first signal is equal to the frequency domain power spectral density for sending the second signal, and a bandwidth of the first signal is greater than a bandwidth of the second signal, the third transmit power is greater than the fourth transmit power.

In some possible implementations, when the third transmit power is equal to the fourth transmit power, and a bandwidth of the first signal is greater than a bandwidth of the second signal, the frequency domain power spectral density of the first signal is less than the frequency domain power spectral density of the second signal.

In some possible implementations, the transceiver unit 1110 is further configured to send first indication information to the terminal device, where the first indication information indicates a power allocation scheme for the terminal device to send the first signal on the first carrier and send the second signal on the second carrier.

The power allocation scheme includes: When the first indication information indicates a first power allocation scheme, the frequency domain power spectral density for sending the first signal is equal to the frequency domain power spectral density for sending the second signal, or the third transmit power is equal to the fourth transmit power.

When the first indication information indicates a second power allocation scheme, the power spectral density of the first signal on the first frequency-domain resource on the first carrier is greater than the power spectral density of the first signal on the second frequency-domain resource on the first carrier, and the power spectral density of the second signal on the third frequency-domain resource on the second carrier is greater than the power spectral density of the second signal on the second frequency-domain resource on the fourth carrier.

It should be understood that, for a specific process in which the units in the communication apparatus 1100 perform the foregoing corresponding steps, refer to the foregoing descriptions related to the network device in related embodiments with reference to the method 500. For example, the transceiver unit 1110 may perform receiving and sending steps in the foregoing method embodiment, and the processing unit 1120 may perform a processing step and a step other than receiving and sending. Various specific processing methods are described in the method embodiments. For brevity, details are not described herein again.

Optionally, the transceiver unit 1110 may include a receiving unit (module) and a sending unit (module), configured to perform steps of receiving information and sending information by the network device in embodiments of the method 500.

It should be understood that, the transceiver unit 1110 may be a transceiver, an input/output interface, or an interface circuit. A storage unit may be a memory. The processing unit 1120 may be implemented by a processor. FIG. 12 is a schematic block diagram of another communication apparatus 1200 according to an embodiment of this application. As shown in FIG. 12, the communication apparatus 1200 may include a processor 1210, a memory 1220, and a transceiver 1230.

The communication apparatus 1100 shown in FIG. 11 or the communication apparatus 1200 shown in FIG. 12 can implement steps performed by the network device in embodiments of the method 500. For similar descriptions, refer to the descriptions in the foregoing corresponding method. To avoid repetition, details are not described herein again.

It should be further understood that the communication apparatus 1100 shown in FIG. 11 or the communication apparatus 1200 shown in FIG. 12 may be a network device.

It should be further understood that division into the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may also be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing method or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing method, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that can invoke the program. For another example, the units may be integrated and implemented in a form of a system-on-a-chip (system-on-a-chip, SoC).

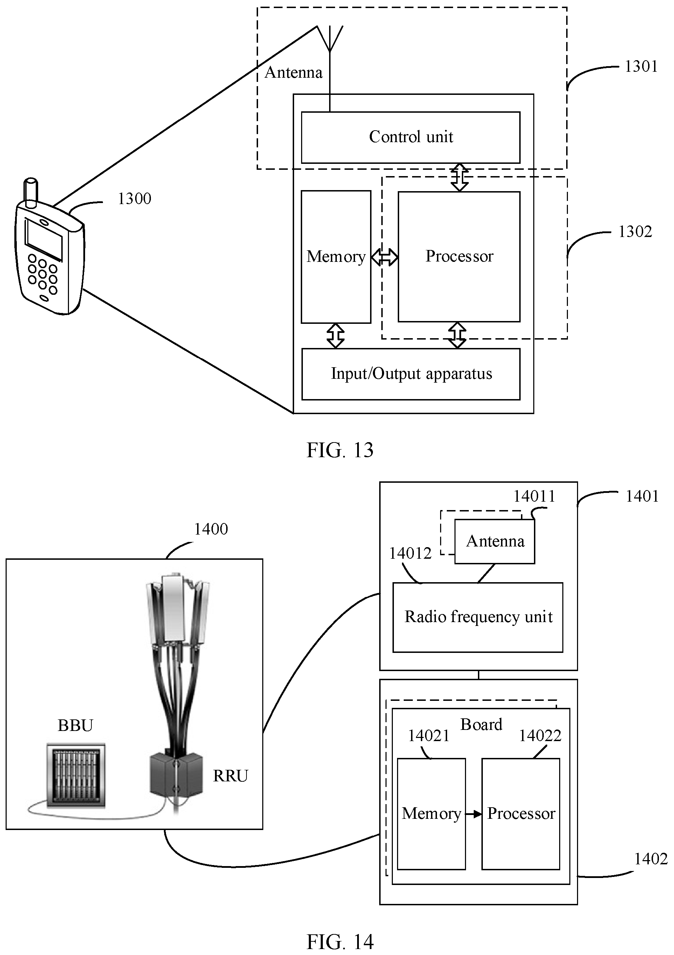

FIG. 13 is a diagram of a structure of a terminal device 1300 according to this application. The terminal device 1300 may be configured to implement a function of the terminal device in the foregoing method. The communication apparatus 900 or the communication apparatus 1000 may be configured in the terminal device 1300. Alternatively, the communication apparatus 900 or the communication apparatus 1000 may be the terminal device 1300. In other words, the terminal device 1300 may perform an action performed by the terminal device in the method 500. Optionally, for ease of description, FIG. 13 shows only main components of the terminal device. As shown in FIG. 13, the terminal device 1300 includes a processor, a memory, a control circuit, an antenna, and an input/output apparatus.

The processor is mainly configured to process a communication protocol and communication data, control the entire terminal device, execute a software program, and process data of the software program, for example, is configured to support the terminal device to perform the actions described in the foregoing embodiments of the indication method for transmitting a precoding matrix. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to: receive data input by a user and output data to the user.

After the terminal device is powered on, the processor may read the software program in the storage unit, interpret and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 13 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 13 integrates functions of the baseband processor and the central processing unit. A person skilled in the art may understand that the baseband processor and the central processing unit may also be independent processors, and are interconnected by using a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have a transceiver function may be considered as a transceiver unit 1301 of the terminal device 1300, and the processor having a processing function may be considered as a processing unit 1302 of the terminal device 1300. As shown in FIG. 13, the terminal device 1300 includes the transceiver unit 1301 and the processing unit 1302. The transceiver unit may also be referred to as a transceiver, a transceiver machine, a transceiver apparatus, or the like. Optionally, a component that is in the transceiver unit 1301 and that is configured to implement a receiving function may be considered as a receiving unit, and a component that is in the transceiver unit 1301 and that is configured to implement a sending function may be considered as a sending unit. In other words, the transceiver unit 1301 includes the receiving unit and the sending unit. For example, the receiving unit may also be referred to as a receiver, a receiver machine, or a receiving circuit, and the sending unit may also be referred to as a transmitter, a transmitter machine, or a transmitting circuit.

FIG. 14 is a diagram of a structure of a network device 1400 according to an embodiment of this application. The network device may be configured to implement a function of the network device in the foregoing method. The network device 1400 includes one or more radio frequency units, for example, a remote radio unit (remote radio unit, RRU) 1401, and one or more baseband units (baseband units, BBUs) (which may also be referred to as a digital unit (digital unit, DU)) 1402. The RRU 1401 may be referred to as a transceiver unit, a transceiver machine, a transceiver circuit, a transceiver, or the like, and may include at least one antenna 14011 and a radio frequency unit 14012. The RRU 1401 is mainly configured for transmission and reception of a radio frequency signal and conversion between a radio frequency signal and a baseband signal, for example, sending a signaling message in the foregoing embodiment to a terminal device. The BBU 1402 is mainly configured to: perform baseband processing, control a base station, and the like. The RRU 1401 and the BBU 1402 may be physically disposed together, or may be physically disposed separately, in other words, in a distributed base station.

The BBU 1402 is a control center of the base station, may also be referred to as a processing unit, and is mainly configured to implement baseband processing functions, for example, channel coding, multiplexing, modulation, and spread spectrum. For example, the BBU (the processing unit) 1402 may be configured to control the base station to perform an operation procedure related to the network device in the foregoing method embodiment.

In an example, the BBU 1402 may include one or more boards. A plurality of boards may jointly support a radio access network (for example, an LTE system or a 5G system) of a single access standard, or may respectively support radio access networks of different access standards. The BBU 1402 may further include a memory 14021 and a processor 14022. The memory 14021 is configured to store necessary instructions and data. For example, the memory 14021 stores a codebook and the like in the foregoing embodiments. The processor 14022 is configured to control the base station to perform a necessary action, for example, is configured to control the base station to perform an operation procedure related to the network device in the foregoing method embodiment. The memory 14021 and the processor 14022 may serve one or more boards. In other words, a memory and a processor may be separately disposed on each board. Alternatively, a plurality of boards may share a same memory and a same processor. In addition, a necessary circuit may further be disposed on each board.

In a possible implementation, with development of a system-on-a-chip (System-on-a-chip, SoC) technology, all or a part of functions of the parts 1402 and 1401 may be implemented by using the SoC technology, for example, implemented by using one base station function chip. The base station function chip integrates components such as a processor, a memory, and an antenna port. A program of a base station-related function is stored in the memory. The processor executes the program to implement the base station-related function. Optionally, the base station function chip can also read from an external memory of the chip, to implement the base station-related function.

It should be further understood that division into the units in the foregoing apparatus is merely logical function division. During actual implementation, all or a part of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may also be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing method or the foregoing units may be implemented by using a hardware integrated logic circuit in a processor element, or may be implemented in the form of software invoked by the processing element. In an example, a unit in any one of the foregoing apparatuses may be one or more integrated circuits configured to implement the foregoing method, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that can invoke the program. For another example, the units may be integrated and implemented in a form of a system-on-a-chip (system-on-a-chip, SoC).

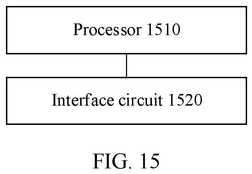

An embodiment of this application further provides a chip system. As shown in FIG. 15, the chip system includes at least one processor 1510 and at least one interface circuit 1520. The processor 1510 and the interface circuit 1520 may be interconnected through a line. For example, the interface circuit 1520 may be configured to receive a signal from another apparatus (for example, the memory of the terminal device 1300). For another example, the interface circuit 1520 may be configured to send a signal to another apparatus (for example, the processor 1510). For example, the interface circuit 1520 may read instructions stored in a memory, and send the instructions to the processor 1510. When the instructions are executed by the processor 1510, the terminal device performs the steps performed by the terminal device in the foregoing embodiments. Certainly, the chip system may further include another discrete component. This is not specifically limited in embodiments of this application.

An embodiment of this application further provides a communication system. The system includes the network device and the terminal device that are provided in the foregoing method embodiment.

An embodiment of this application further provides a computer-readable storage medium, configured to store computer program code. The computer program includes instructions used for performing any communication method provided in the foregoing embodiments of this application. The readable medium may be a read-only memory (read-only memory, ROM) or a random access memory (random access memory, RAM). This is not limited in embodiments of this application.

This application further provides a computer program product. The computer program product includes instructions. When the instructions are executed, the network device and the terminal device are caused to perform corresponding operations in the foregoing method.

An embodiment of this application further provides a chip disposed in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus performs any communication method provided in the foregoing embodiments of this application.

Optionally, the computer instructions are stored in a storage unit.

Optionally, the storage unit is a storage unit in the chip, for example, a register or a cache. Alternatively, the storage unit may be a storage unit that is in the terminal and that is located outside the chip, for example, a ROM, another type of static storage device that can store static information and instructions, or a random RAM. Any processor mentioned above may be a CPU, a microprocessor, an ASIC, or one or more integrated circuits configured to control program execution of a feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device.

The terminal device, the computer-readable storage medium, the computer program product, or the chip provided in embodiments is configured to perform the corresponding method provided above. Therefore, for beneficial effects that can be achieved, refer to the beneficial effects of the corresponding method provided above. Details are not described herein again.

It may be understood that the memory in this embodiment of this application may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. There are a plurality of different types of RAMs, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, names may be assigned to various objects such as messages/ information/devices/network elements/systems/apparatuses/actions/operations/procedures/concepts. It may be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

All or a part of the methods in embodiments of this application may be implemented by software, hardware, firmware, or any combination thereof. When software is used to implement the methods, all or a part of the methods may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device like a server integrating one or more usable media.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a readable storage medium, and includes several instructions for instructing a computer device (which may be a personal computer, a server, a network device, or the like) to perform all or a part of the steps of the method described in embodiments of this application. The readable storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is performed by a terminal device, and the method comprises:
determining first transmit power of a first signal in a first time unit on a first carrier, and determining second transmit power of a second signal in a second time unit on a second carrier, wherein the first time unit and the second time unit overlap in time; and
when a sum of the first transmit power and the second transmit power is greater than a transmit power threshold, determining third transmit power of the first signal in the first time unit, wherein the third transmit power is less than or equal to the first transmit power, and determining fourth transmit power of the second signal in the second time unit, wherein the fourth transmit power is less than or equal to the second transmit power, wherein
a frequency domain power spectral density for sending the first signal is equal to a frequency domain power spectral density for sending the second signal; or
the third transmit power is equal to the fourth transmit power; or
a power spectral density of the first signal on a first frequency-domain resource on the first carrier is greater than a power spectral density of the first signal on a second frequency-domain resource on the first carrier, a power spectral density of the second signal on a third frequency-domain resource on the second carrier is greater than a power spectral density of the second signal on a fourth frequency-domain resource on the second carrier, a frequency of the first carrier is less than a frequency of the second carrier, a frequency of the first frequency-domain resource is less than a frequency of the second frequency-domain resource, and a frequency of the third frequency-domain resource is less than a frequency of the fourth frequency-domain resource.

2. The method according to claim 1, wherein the method further comprises:
preferentially allocating transmit power of the terminal device to the first frequency-domain resource on the first carrier and the fourth frequency-domain resource on the second carrier.

3. The method according to claim 1 or 2, wherein when the frequency domain power spectral density for sending the first signal is equal to the frequency domain power spectral density for sending the second signal, and a bandwidth of the first signal is greater than a bandwidth of the second signal, the third transmit power is greater than the fourth transmit power.

4. The method according to claim 1 or 2, wherein when the third transmit power is equal to the fourth transmit power, and a bandwidth of the first signal is greater than a bandwidth of the second signal, the frequency domain power spectral density of the first signal is less than the frequency domain power spectral density of the second signal.

5. The method according to any one of claims 1 to 4, wherein before the determining the third transmit power of the first signal in the first time unit, and determining the fourth transmit power of the second signal in the second time unit, the method further comprises:
receiving first indication information sent by a network device, wherein the first indication information indicates a power allocation scheme for the terminal device to send the first signal on the first carrier and send the second signal on the second carrier; and
determining the third transmit power and the fourth transmit power based on the first indication information comprises:
when the first indication information indicates a first power allocation scheme, determining that the frequency domain power spectral density for sending the first signal is equal to the frequency domain power spectral density for sending the second signal, or the third transmit power is equal to the fourth transmit power; or
when the first indication information indicates a second power allocation scheme, determining that the power spectral density of the first signal on the first frequency-domain resource on the first carrier is greater than the power spectral density of the first signal on the second frequency-domain resource on the first carrier, and the power spectral density of the second signal on the third frequency-domain resource on the second carrier is greater than the power spectral density of the second signal on the fourth frequency-domain resource on the second carrier.

6. The method according to any one of claims 1 to 5, wherein the first signal is a sensing signal or an integrated sensing and communication signal, and the second signal is a sensing signal or an integrated sensing and communication signal.

7. A communication method, wherein the method is performed by a network device, and the method comprises:
receiving a first signal sent by a terminal device in a first time unit on a first carrier at third transmit power, and a second signal sent by the terminal device in a second time unit on a second carrier at fourth transmit power, wherein
a frequency domain power spectral density for sending the first signal is equal to a frequency domain power spectral density for sending the second signal; or
the third transmit power is equal to the fourth transmit power; or
a power spectral density of the first signal on a first frequency-domain resource on the first carrier is greater than a power spectral density of the first signal on a second frequency-domain resource on the first carrier, a power spectral density of the second signal on a third frequency-domain resource on the second carrier is greater than a power spectral density of the second signal on a fourth frequency-domain resource on the second carrier, a frequency of the first carrier is less than a frequency of the second carrier, a frequency of the first frequency-domain resource is less than a frequency of the second frequency-domain resource, and a frequency of the third frequency-domain resource is less than a frequency of the fourth frequency-domain resource.

8. The method according to claim 7, wherein when the frequency domain power spectral density for sending the first signal is equal to the frequency domain power spectral density for sending the second signal, and a bandwidth of the first signal is greater than a bandwidth of the second signal, the third transmit power is greater than the fourth transmit power.

9. The method according to claim 7, wherein when the third transmit power is equal to the fourth transmit power, and a bandwidth of the first signal is greater than a bandwidth of the second signal, the frequency domain power spectral density of the first signal is less than the frequency domain power spectral density of the second signal.

10. The method according to any one of claims 7 to 9, wherein before the receiving the first signal sent by the terminal device in the first time unit on the first carrier at the third transmit power, and the second signal sent by the terminal device in the second time unit on the second carrier at the fourth transmit power, the method further comprises:
sending first indication information to the terminal device, wherein the first indication information indicates a power allocation scheme for the terminal device to send the first signal on the first carrier and send the second signal on the second carrier, wherein
the power allocation scheme comprises: when the first indication information indicates a first power allocation scheme, the frequency domain power spectral density for sending the first signal is equal to the frequency domain power spectral density for sending the second signal, or the third transmit power is equal to the fourth transmit power; or
when the first indication information indicates a second power allocation scheme, the power spectral density of the first signal on the first frequency-domain resource on the first carrier is greater than the power spectral density of the first signal on the second frequency-domain resource on the first carrier, and the power spectral density of the second signal on the third frequency-domain resource on the second carrier is greater than the power spectral density of the second signal on the fourth frequency-domain resource on the second carrier.

11. The method according to any one of claims 7 to 10, wherein the first signal is a sensing signal or an integrated sensing and communication signal, and the second signal is a sensing signal or an integrated sensing and communication signal.

12. A communication apparatus, wherein the apparatus comprises at least one processor, and the at least one processor is coupled to at least one memory; and
the at least one processor is configured to execute a computer program or instructions in the at least one memory, to cause the method according to any one of claims 1 to 6 to be performed, or cause the method according to any one of claims 7 to 11 to be performed.

13. A computer-readable storage medium, wherein the computer-readable storage medium stores a computer program or instructions, and when a computer reads and executes the computer program or the instructions, the computer is caused to perform the method according to any one of claims 1 to 6, or perform the method according to any one of claims 7 to 11.

14. A chip, comprising a processor, configured to perform the method according to any one of claims 1 to 6, or perform the method according to any one of claims 7 to 11.
